# EUROPÄISCHE PATENTANMELDUNG

(11) **EP 2 581 870 A1**
(43) Veröffentlichungstag der Anmeldung: **17.04.2013**
(21) Anmeldenummer: 12188404.3
(22) Anmeldetag: 12.10.2012
(51) Int. Cl.: G06Q 30/02

(54) **Verfahren und Vorrichtung zum Erstellen von empfängerspezifischen elektronischen Dokumenten**

(30) Priorität: 12.10.2011 DE 102011084370
(71) Anmelder: Graf, Gerd, 87435 Kempten (DE); konzepthaus Medien und Marketing GmbH, 80807 München (DE)
(72) Erfinder: Graf, Dr. Gerd, 87435 Kempten (DE); Hasenbeck, Uwe, 82024 Taufkirchen (DE); Ziegelasch, Karin, 80801 München (DE)
(74) Vertreter: Erhardt, Martin

(57) **Zusammenfassung**

Die Erfindung betrifft ein Verfahren zum Erstellen eines elektronischen Dokuments, das insbesondere auf einem Bildschirm, und/oder auf einem Drucker und/oder über Lautsprecher ausgebbar und/oder auf einem computerlesbaren Medium speicherbar und/oder von einer Übertragungseinrichtung übertragbar ist und das an einen ausgewählten Empfängerkreis bereitgestellt bzw. versendet wird. Die Erfindung betrifft ferner eine Vorrichtung zur Erstellung eines solchen empfängerspezifischen elektronischen Dokuments sowie ein computerlesbares Medium mit Steuerbefehlen zum Erstellen eines derartigen elektronischen Dokuments.

## Beschreibung

Die Erfindung betrifft ein Verfahren zum Erstellen eines elektronischen Dokuments, das insbesondere auf einem Bildschirm, auf einem Drucker und/oder über Lautsprecher ausgebbar und/oder auf einem computerlesbaren Medium speicherbar und/oder von einer Übertragungseinrichtung übertragbar ist und das an einen ausgewählten Empfängerkreis bereitgestellt bzw. versendet wird. Die Erfindung betrifft ferner eine Vorrichtung zur Erstellung eines solchen empfängerspezifischen elektronischen Dokuments sowie ein computerlesbares Medium mit Steuer befehlen zum Erstellen eines derartigen elektronischen Dokuments.

Im Sinne der Erfindung ist ein elektronisches, ggf. druckfähiges, abspielbares, speicherbares und/oder übertragbares Dokument beispielsweise eine Website, ein Newsletter, ein Trendletter, eine Pop-up-Werbung bzw. ein allgemeine Informationsdokumente, welche auf elektronischen Ausgabegeräten darstellbar bzw. druckbar, speicherbar, übertragbar und/oder abspielbar sind. Insbesondere sind elektronische Dokumente im Sinne der Erfindung elektronische Nachrichten, welche über das Internet, ein Intranet oder einem sonstigen elektronischen Informationsübermittelungsnetzwerk, wie beispielsweise ein Mobilfunknetz, versendet, d.h. übertragen bzw. auf Servern dieser Informationsübermittlungsplattformen zur Abholung bereitgestellt bzw. gespeichert werden können. Als Informationsübermittlungsplatfformen sind insbesondere Mobilfunknetze zu nennen, auf die bspw. mit so genannten Smartphones oder herkömmlichen Mobiltelefonen in elektronischer Form zugegriffen werden kann. Es sind weiter insbesondere Server zu nennen, auf denen die elektronischen Dokumente zur Abholung bereitgestellt werden. Weiter können die elektronischen Dokumente beispielsweise auf einem Bildschirm angezeigt, mittels eines Druckers oder dergleichen ausgedruckt und /oder audiell bzw. akustisch ausgegeben sowie auf elektronisch, optisch, akustisch oder per Funk mittels Übertragungseinrichtungen übertragen werden.

Endgeräte, die elektronische Dokumente ausgeben können, werden immer vielfältiger bezüglich unterstützter Mensch-Maschine-Schnittstellen und deren Hardwareausstattung. Daher müssen elektronische Dokumente auf einer Vielzahl von unterschiedlichen Endgeräten, insbesondere mobilen Endgeräten, ausgebbar sein. Hierbei sollen dem Nutzer Informationseinheiten in Abhängigkeit der verwendeten Ausgabemedien in möglichst einheitlicher Art präsentiert werden. Der Nutzer erwartet von einem elektronischen Dokument, dass dessen Ausgabe und/oder Speicherung auf einem Handy, insbesondere einem i-Phone®, einem Laptop, einem Tablet-PC, insbesondere i-pad®, einem Desktop PC, einem Flash-Speicher oder dessen Ausgabe als Printmedium - jeweils mit unterschiedlicher Auflösung und Hardwareausstattung - fehlerfrei durchgeführt wird. Auf Seite des Herstellers des elektronischen Dokuments, zum Beispiel Händler, Agenturen oder Verlage, sollen die Inhalte des elektronischen Dokuments ohne großen technischen Aufwand bereitstellbar und speicherbar sein.

Die Nutzung des Internets und von Mobiltelefonen, die auf das Internet zugreifen können, wird immer umfangreicher und schnelllebiger. Dabei werden Informationen versandt, bzw. stehen für ihren Abruf bereit, welche von einem Internetnutzer nicht immer als besonders interessant angesehen werden, da sie für ihn nicht relevante Informationen enthalten. Andere Informationen jedoch, die er sich elektronisch über das Internet oder auf seinem Smartphone ansehen möchte, erreichen ihn nicht, da sie in der Flut von Informationen nicht auffindbar sind. Andererseits ist es für Hersteller von Produkten oder Produktgruppen oder Werken bzw. Informationsdokumenten schwierig, die vom Endverbraucher benötigte Information zum richtigen Zeitpunkt in geeigneter Weise zur Verfügung zu stellen. Hierbei ist es vorteilhaft Information in Abhängigkeit von benutzerspezifischen Daten, wie zum Beispiel dessen geographische Position, bereitzustellen.

Einerseits besteht das Problem, die relevante Information zum richtigen Zeitpunkt an den interessierten Endverbraucher gelangen zu lassen und andererseits diese Information auch im bevorzugten Format für das Ausgabegerät des Endverbrauchers bereitzustellen. Hierbei besteht speziell bei Websites das Problem, ob der Adressat die elektronische Information auf einem PC oder einem Smartphone öffnet, da diese Geräte aufgrund unterschiedlicher Displays bzw. Bildschirme unterschiedliche Anzeigeformate erfordern. Speziell bei Druckerzeugnissen besteht das Problem, dass das elektronische Dokument nicht nur für eine Bildschirmausgabe optimiert sein muss, sondern auch bezüglich physischer Gegebenheiten des Druckerzeugnisses angepasst sein muss. Hierbei bereitet es gemäß herkömmlicher Verfahren großen technischen Aufwand, ein elektronisches Dokument bereitzustellen, welches als Faltblatt, Wurfzettel oder als Poster ausgegeben werden kann.

Gemäß herkömmlicher Verfahren ist ein Bereitstellen eines elektronischen Dokuments, welches als Vorlage für Druckerzeugnisse dient, fehleranfällig, da oftmals für jedes Ausgabeformat ein eigenes elektronisches Dokument bereitgestellt wird. Hierbei kann es vorkommen, dass sich die Inhalte der erstellten elektronischen Dokumente in fehlerhafterweise unterscheiden, obwohl man Dokumente gleichen Inhalts für jeweils ein anderes Ausgabemedium vorsehen wollte.

Darüber hinaus besteht die Anforderung an die zu versendenden Informationen darin, dass diese aktuell sind und den Endverbraucher bzw. einen Händler über die neuesten Entwicklungen bezüglich des Produktes, der Produktgruppe oder des Werkes der Informationsnachricht informieren. Da Veränderungen am Produkt bzw. an der Produktgruppe oder des Werkes bzw. des Informationsdokuments immer schneller vollzogen werden, müssen diese Veränderungen möglichst schnell als aktualisierte Informationen beim Endverbraucher ankommen.

Um derart schnelllebige und meist auch komplexe Websites, beispielsweise als statische oder versandte Websites zu erzeugen, zu aktualisieren und/oder empfängerspezifisch bereitzustellen bzw. zu versenden, sind aufwändige Verfahren und Systeme notwendig. Aus dem Stand der Technik bekannte Systeme arbeiten beispielsweise direkt im HTML-Code oder mittels so genannter Content-Management-Systeme, deren Bedienung jedoch meist kompliziert und schulungsintensiv ist. Folglich sind solche komplizierten Systeme fehleranfällig und kosten intensiv hinsichtlich der Erzeugung elektronischer Dokumente, die sowohl inhaltlich, zeitlich als auch personenspezifisch angepasst sind.

Ausgehend vom Stand der Technik besteht also die Notwendigkeit ein Verfahren bzw. ein System zur Verfügung zu stellen, das es erlaubt Websites oder andere elektronische Dokumente schnell, problemlos, fehlerfrei und vor allem einfach zu erzeugen, bzw. zu aktualisieren. Dabei sollen die potentiellen Empfänger, als auch die Vorgaben der Hersteller, bzw. der Händler oder der Agenturen oder der Verlage berücksichtigt werden, so dass beim Endverbraucher ankommende elektronische Dokumente für diesen eine nutzbringende Informationsquelle darstellen, wobei er die Dokumente auf einem Bildschirm ansehen, auf ein bedruckbares Medium aufbringen, auf einem computerlesbaren Medium speichern und/oder über Lautsprecher ausgeben kann.

US 2002/0188 635 A1 zeigt ein Werbungsaktualisierungssystem für Websites, wobei die Anordnung der Werbung auf der Website durch eine Vorlage des Website-Eigentümers vorgegeben ist. Das in US 2002/0188 635 A1 gezeigte System kann flexibel auf Basis verschiedener Vorgaben die einzubindende Werbung selbstständig aktualisieren und anpassen. Die eingebundene Werbung ist hier weder empfängerspezifisch angepasst, noch berücksichtigt sie das Ausgabemedium, auf dem die Werbung angezeigt werden soll.

WO 01/69 452 A2 beschreibt ein internetbasiertes Newsletterbereitstellungssystem, welches dynamisch auf Benutzervorgaben/-änderungen Teilinhalte und/oder Zusammenfassungen von Zeitschriftenartikeln bereitstellt, die nach einer Registrierung des Benutzers vom System ausgewählt werden. Das Benutzerprofil, gemäß welchem die Newsletter mit dem Hinweis auf neue Zeitschriftenartikel erstellt werden, wird dabei entweder vom Benutzer selbst über eine Abfragemaske eingegeben und/oder vom System über das Benutzerverhalten beim Lesen der Newsletter dynamisch angepasst.

US 6,766,362 B1 zeigt einen Computernetzwerkserver, der eine angepasste Zeitung in Abhängigkeit eines Benutzerprofils dem entsprechenden Nutzer bereitstellt. Diese Druckschrift lehrt eine Relation zwischen Themen, Unterthemen und Stichwörtern. Hieraus entnimmt der Fachmann ein Bereitstellen geeigneter Repräsentationsmechanismen.

Ferner ist die Druckschrift "Klaus Kreulich: Publishing Workflows with XSL-FO; In: xml Europe 2003, London, England, 2003, International Digital Enterprise Alliance, [CITESEER] doi=10.1.1.198.9649&rep=rep1&type=pdf[Abgerufen 25.01.2012]" bekannt. Druckschrift lehrt ein Veröffentlichen von Prozessketten in einer xml Repräsentation. Ferner entnimmt der Fachmann dieser Druckschrift einen Vorschlag, Prozessketten ausgehend von einem xml Dokument als ein pdf-Dokument abzuspeichern.

F. R. Meneguzzi, et.al: Strategies for document optimisation in digital publishing, In: DocEng 2004, October 28-30, Milwaukee, Wisconsin USA [ACM] DOI: 10.1145/1030397.1030429 lehrt das Optimieren und digitale Veröffentlichen von personalisierten Dokumenten sowie eine prototypische Implementierung eines vorgeschlagenen Algorithmus.

Derzeit ist jedoch kein System bekannt, welches basierend auf Vorgaben eines Herstellers für ein Produkt bzw. einer Produktgruppe oder nach Vorgaben einer Agentur bzw. eines Verlages empfängerspezifisch Informationen über das Internet bzw. Mobilfunknetze versenden bzw. bereitstellen kann, wobei die versendeten Informationen sowohl optisch ais auch akustisch individuell anpassbar sind. Solch ein Anpassen der Informationen erfolgt gemäß herkömmlicher Systeme nicht in Abhängigkeit von Benutzerinformationen und in Abhängigkeit von Hardwareeigenschaften.

Aufgabe der Erfindung ist es, ein Verfahren aufzuzeigen und ein nach dem Verfahren arbeitendes System bereitzustellen, mit dem empfängerspezifische Informationen nach Vorgaben eines Herstellers oder Händlers bzw. einer Agentur oder eines Verlages optisch in gedruckter Form oder auf einem Bildschirm und/oder akustisch bzw. audiell empfängerspezifisch erstellt und den Empfängern zur Verfügung gestellt werden können. Dabei soll das System technisch unaufwändig, problemlos, fehlerfrei und einfach handhabbar sein, damit das Verfahren zur empfängerspezifischen Erstellung von Informationen in elektronischen Dokumenten von Anwendern ausgeführt werden kann, die keine spezielle Vorbildung in der Datenverarbeitung haben.

Die Aufgabe der Erfindung wird durch ein Verfahren gemäß den Merkmalen des Anspruchs 1 gelöst, wobei Weiterentwicklungen und bevorzugte Ausführungsformen in den von Anspruch 1 direkt oder indirekt abhängigen Unteransprüchen angegeben sind. Ein weiterer unabhängiger Anspruch stellt eine Vorrichtung zum Durchführen des Verfahrens gemäß Anspruch 1 und seiner Unteransprüche bereit. Weiterbildungen der erfindungsgemäßen Vorrichtung sind in den abhängigen Unteransprüchen angegeben. Ein weiterer unabhängiger Anspruch ist auf ein computerlesbares Medium gerichtet, welches Steuerbefehle zum Ausführen des erfindungsgemäßen Verfahrens aufweist.

Zum Erstellen eines elektronischen empfängerspezifischen Dokuments wird in einem ersten Schritt zunächst eine Vorlage für das elektronische Dokument ausgewählt, welche unter vermarktungsspezifischen Vorgaben für ein Produkt oder eine Produktgruppe vorbereitet ist. Mit dem Auswählen einer bereitgestellten, auf vermarktungsspezifische Vorgaben abgestimmten Vorlage wird erreicht, dass ein Layout bzw. ein sogenanntes "Corporate Identity" des Herstellers des Produktes oder einer Produktgruppe klar identifizierbar bleibt. Weiterhin wird dadurch gewährleistet, dass die vermarktungsspezifischen Vorgaben beispielsweise des Herstellers bzw. der Agentur, welche für den Hersteller tätig wird, verwendet werden, wobei insbesondere für Endverbraucher bekannte Elemente erhalten bleiben. Unter vermarktungsspezifischen Vorgaben fallen Vorgaben, die von den Herstellen bzw. Händlern oder den Agenturen oder den Verlagen zu technischer Ausstattung, Preis, Lieferbedingungen, Qualität, Zahlungsverkehr, etc. vorgegeben sind. Vermarktungsspezifisch umfasst im Sinne der Erfindung auch Vorgaben, bezüglich der Art und Weise, wie das Produkt bzw. die Produktgruppe vom Endverbraucher besichtigt bzw. erworben oder abgeholt werden kann. Weitere vermarktungsspezifische Vorgaben, welche hier nicht explizit genannt sind, sollen vom Erfindungsgedanken ebenfalls umfasst sein.

Ein weiterer Punkt bei der Auswahl der Vorlage für das Erstellen eines erfindungsgemäßen empfängerspezifischen elektronischen Dokuments ist die Berücksichtigung des Ausgabemediums, auf dem das elektronische Dokument ausgegeben werden soll. Dabei kann im Allgemeinen zwischen fünf Hauptgruppen von Ausgabemedien unterschieden werden. Zum einen ist dies ein Computerbildschirm. Hierunter fallen Desktop PC, Laptops, Notebooks, Tablets oder andere, oft häuslich stationierte, internetfähigen Geräte. Eine andere Gruppe von Ausgabegeräten bilden Bildschirme bzw. Displays von Mobilfunktelefonen, insbesondere Smartphones, welche über ihre Mobilfunkeigenschaften auf das Internet zugreifen können. Eine dritte Gruppe umfasst Druckvorrichtungen, die das erfindungsgemäße elektronische Dokument auf einem Druckmedium, wie bspw. Papier, ausgeben können. Eine vierte Gruppe bilden Audiogeräte, die das elektronische Dokument ganz oder teilweise in akustischer Form ausgeben können. Eine fünfte Gruppe von Ausgabemedien bilden computerlesbare Speichermedien oder computergestützte Übertragungseinrichtungen, die zwar das erfindungsgemäße elektronische Dokument nicht direkt ausgeben können, jedoch die Ausgabe des Dokuments auf den zuvor genannten Ausgabemedien flexibel ermöglichen. So kann bspw. ein computerlesbares Speichermedium von einem Desktop PC, Laptops, Notebooks, Tablet-PC oder anderen computergestützten Vorrichtungen, insbesondere von Druckervorrichtungen, ausgelesen werden und so das erfindungsgemäß erstellte elektronische Dokument auf einem Bildschirm bzw. Display oder auf einem Printmedium oder über Lautsprecher ausgegeben werden. Im Sinne der Erfindung sollen demnach computerlesbare Speichermedien und computergestützte Übertragungseinrichtungen ebenfalls als Ausgabemedien angesehen werden.

Von der Erfindung umfasst sind dabei alle Übertragungseinrichtung, die zur Übertragung eines erfindungsgemäßen elektronischen Dokuments geeignet sind, unabhängig ob dies per Kabel oder kabellos oder mittels elektrischer, optischer oder akustischer Signale oder per Funk erfolgt. Vor einer Übertragung wird üblicherweise eine Zwischenspeicherung des zu übertragenden elektronischen Dokuments erfolgen und nach der Übertragung kann das elektronische Dokument direkt bspw. auf einem Bildschirm oder einem Printmedium oder als akustische Information ausgegeben werden. Auch eine Speicherung des übertragenen empfängerspezifischen elektronischen Dokuments ist eine denkbare Alternative, die von der Erfindung umfasst sein soll. Ob nun eine visuelle, akustische, gedruckte und/oder zwischengespeicherte indirekte, ggf. nach einer Übertragung, erfolgende Ausgabe vorgesehen ist, in allen Fällen sind je nach Art, Gattung und/oder Hersteller des Ausgabe- bzw. Speichermediums ausgabe- bzw. speicherspezifische Vorgaben einzuhalten, damit die Ausgabe störungsfrei erfolgen kann. Im Falle einer vorgesehenen (zwischengeschalteten) Übertragung des elektronischen Dokuments vor dessen Speicherung oder Ausgabe, sind auch die Anforderungen an eine solche Übertragung zu berücksichtigen.

Für das erfindungsgemäße Verfahren ist dementsprechend bereits für die Auswahl einer Vorlage für die Erstellung eines empfängerspezifischen elektronischen Dokument wichtig, dass die zur Verfügung gestellte Information auch auf dem konkreten Ausgabemedium ausgebbar oder auf dem vorgesehenen Speichermedium speicherbar ist, welche vom Empfänger (potentiell) benutzt werden. Dabei ist die Art der Informationsübermittelung, ob über Internet oder Mobilfunk, für das erfindungsgemäße Verfahren nicht ausschlaggebend, sondern vielmehr die technischen Eigenschaften des Ausgabemediums, wie zur Verfügung stehender Speicherplatz, Bildschirmauflösung, Druckbereich, ausgebbarer Frequenzbereich oder bereitgestellte Bedienelemente. Weist das elektronische Dokument interaktive Inhalte auf, so ist zu berücksichtigen, welche Bedienelemente das Ausgabemedium unterstützt. Beispielsweise bietet ein Laptop eine vollwertige Tastatur, während ein Handy lediglich eine virtuelle oder eine kleine physische Tastatur bereitstellt. Auch bei den meist integrierten Lautsprechern gibt verschiedenen Leistungsmerkmale, die berücksichtigt werden müssen, genauso wie die verschienen Druckformate, bzw. Druckersprachen.

Die Informationseinheiten selbst können entweder vom Verfahrensanwender generiert werden, wozu beispielsweise ein entsprechendes Computerprogramm zur Verfügung steht, oder von den Herstellern, Händlern, Agenturen oder Verlagen dem Verfahrensbenutzer zur Verfügung gestellt werden. Im letzteren Fall stellt der Verfahrensanwender die so verfügbaren Informationseinheiten, die auch als Container bzw. Informationscontainer bezeichnet werden können, nach den vermarktungsspezifischen Vorgaben gemäß der ausgewählten Vorlage zusammen. Verfahrensanwender können dabei wiederum die zuvor genannten Personen oder Personengruppen sein, wobei die Anwendung des erfindungsgemäßen Verfahrens immer unter Prämisse steht, dass die Informationseinheiten oder Informationscontainer empfängerspezifisch, also auf ein Empfängerprofil abgestimmt, in der vorgegebenen, zuvor ausgewählten, vermarktungsspezifischen Vorlage angeordnet werden. Inhaltlich weisen die Informationseinheiten jegliche denkbare Information auf, die über ein Bild- oder Tonausgabegerät übermittelt werden kann, wobei unter Bildausgabegeräte auch Geräte fallen, die Druckerzeugnisse erstellen. Bei den Informationseinheiten ist insbesondere an Texte, Bilder, Videos, Töne, Klänge, Musik, Videoclips, etc. zu denken.

In einem weiteren Schritt werden gemäß dem erfindungsgemäßen Verfahren die in der Vorlage anzuzeigenden Informationseinheiten ausgewählt. Dazu werden Informationseinheiten bereitgestellt, die mit Metainformationen versehen sind, die einem Benutzerprofil zuordenbar sind. Die einzelnen Informationseinheiten, welche in die Vorlagen empfängerspezifisch eingebunden werden sollen, weisen dabei spezielle Informationen auf, die beispielsweise regional verschieden sein können, die ein gewisses Preissegment darstellen, die produktabhängig sind, die im Allgemeinen dafür geeignet sind, Produkte bzw. Produktgruppen voneinander zu unterscheiden und die einem Empfängerprofil zugeordnet werden können.

Die mit Metainformationen versehenen Informationseinheiten können hierarchisch und/oder objektorientiert in einer Datenbank abgespeichert und angeordnet werden. Die Zuordnung der Metainformationen zu den einzelnen Informationseinheiten kann wiederum von den Herstellern des Produkts bzw. der Produktgruppe, von deren Händlern, der beauftragten Agentur oder von einem Verlag flexibel festgelegt werden. Hierbei ist jeder Verfahrensanwender in der Art wie die Zuordnung erfolgen soll frei und kann nach vermarktungsspezifischen Kriterien die Vergabe bzw. Zuordnung von Metainformationen an die einzelnen Informationseinheiten vergeben. Eine hierarchische Modellierung von Informationen ermöglicht es, einzelne Hierarchiestufen anzusprechen. Sollen beispielsweise Informationseinheiten bezüglich Autos angezeigt werden, so ist bevorzugt weitere Informationseinheiten einer niedrigeren Hierarchiestufe, wie zum Beispiel Autozubehör, autospezifische Dienstleistungen und Autopflegematerial in das Dokument mit aufzunehmen. Metadaten liefern Information über die Informationseinheiten, wie zum Beispiel Erstellungsdatum, Lese- und/oder Schreibberechtigungen. Anhand der Metainformation kann beispielsweise eine Informationseinheit ausgetauscht werden, falls diese nicht mehr aktuell ist, das heißt eine Informationseinheit mit neuerem Erstellungsdatum vorliegt.

Die einzelnen Informationseinheiten können wiederum von den Produktherstelle bzw. den Herstellern einer Produktgruppe, von Agenturen, oder Verlagen erstellt werden oder hierarchisch geerbt werden. Die Informationseinheiten, die von einer Gruppe von Verfahrensanwendern, wie beispielsweise Hersteller von Produkten oder Produktgruppen, an Händler weitergegeben werden, können von diesen Händlern je nach Berechtigung angepasst, verändert oder gar gelöscht werden. In einer weiteren Berechtigungsstufe kann ein Händler beispielsweise eine Informationseinheit eines Herstellers nicht bearbeiten, sondern diese Informationseinheit nur in eine Vorlage für ein empfängerspezifisches elektronisches Dokument einbinden. Die ebenfalls vermarktungsspezifischen Vorgaben sind dabei schon in der Vorlage, welche im vorhergehenden Schritt ausgewählt wurde, hinterlegt oder geeigneterweise direkt den Informationseinheiten in einer Berechtigungshierarchie zugeordnet werden. So kann beispielsweise ein Händler die vollständige Produktbeschreibung für seinen Kundenstamm empfängerspezifisch anpassen, ist jedoch beispielsweise nicht befugt die technischen Daten abzuändern. Gegebenenfalls kann dem Händler eine (technische) Information oder eine Preisvorgabe gegeben werden, die er nicht über- oder unterschreiten darf. Gleiches gilt für Agenturen, welche beispielsweise in der Vermarktungskette zwischen den Herstellern und den Händlern agieren oder von Händlern beauftragt werden, die gegebenenfalls branchenübergreifend ein Produkt im Markt platzieren.

Generell lässt sich sagen, dass die Informationseinheiten, welche die für den Endverbraucher nützliche information beinhalten, von dem einzelnen Ersteller der Informationseinheiten, also von dessen Eigentümer mit Rechten für die weitere Benutzung versehen werden können. So wird beispielsweise ein Automobilhersteller seinen "Corporate Identity"-Auftritt, welchen er in allen Printmedien aufrecht erhält, auch für ein elektronisches Dokument aufrecht erhalten wollen. Er wird daher seinen Händlern oder Agenturen nicht die Rechte zur Veränderung seines "Corporate Identiy" geben. Jedoch wird er seinen Händlern eine Preisvorgabe mitsamt weiterer technischer Information für die von den Händlern zu vertreibenden Fahrzeuge geben.

Wie die Auswahl der Vorlagen zum Einbinden der Informationseinheiten ist auch die Informationseinheit selbst abhängig von dem Ausgabe- bzw. Speichermedium, auf dem das erfindungsgemäße empfängerspezifische elektronische Dokument es ausgegeben bzw. gespeichert werden soll. So kann beispielsweise ein Bild, das eine für einen Bildschirm eines Festnetzrechner geeignete Auflösung aufweist, nicht ohne Weiteres auf einem Smartphone-Display, welches technisch gesehen ebenfalls ein Bildschirm ist, mit der gleichen Auflösung dargestellt werden. Auch hinsichtlich der Klangwiedergabe sind die Voraussetzung zwischen einem Mobiltelefon und einem internetangebundenen Rechner sehr unterschiedlich. Analoges gilt für Drucker und Plotter, deren Steuerungen große Unterschiede aufweisen, da bspw. eine für einen Plotter bestimmte Datei nicht auf einem Drucker ausgegeben werden kann.

Welches Ausgabemedium verwendet werden soll, wird letztendlich im Empfängerprofil bestimmt, in welchem bevorzugt das vom Empfänger verwendete Ausgabemedium hinterlegt ist. Jedoch kann schon in der Vorlage für das Erstellen des elektronischen empfängerspezifischen Dokuments gemäß der Erfindung die Vorgabe gemacht werden, für welche Ausgabemedien oder für welches Ausgabemedium das auszugebende elektronische Dokument erstellt werden soll. Ein Erkennen von Eigenschaften eines Ausgabemediums kann mittels Auslesen eben dieser Information erfolgen. Hierbei können technische Merkmale aus Konfigurationsdateien oder Hardwaretreibern ausgelesen werden. Ferner ist es möglich, dass der Empfänger bereits angibt, auf welchem Medium er das elektronische Dokument erhalten möchte. Hierzu kann eine Vielzahl an vordefinierten Hardwareprofilen bereitgestellt werden, aus dem ein passendes ausgewählt wird. Analoges gilt für computerlesbare Speichermedien und computergestützte Übertragungseinrichtungen, welche im Rahmen der Erfindung als Ausgabemedien betrachtet werden. Von der Erfindung umfasst sind dabei alle Übertragungsmedien, die zur Übertragung eines erfindungsgemäßen elektronischen Dokuments geeignet sind, unabhängig, ob dies per Kabel oder kabellos oder mittels elektrischer, optischer oder akutischer Signale erfolgt.

Eine weitere Alternative stellt die Vorgabe dar, dass nur solche Informationseinheiten verwendet werden können, die für ein bestimmtes Ausgabemedium vorgesehen sind. Speziell diese Möglichkeit wird man beim Erstellen von Vorlagen bereits berücksichtigen, da auch die Vorlage abhängig vom Ausgabemedium ist. In den meisten Fällen wird es für ähnliche elektronische Dokumente, die mit dem erfindungsgemäßen Verfahren ersteilbar sind, mehrere Versionen geben, je nachdem, für welches Ausgabe-, Speicher- und/oder Übertragungsmedium das zu erstellende elektronische Dokument vorgesehen ist. Dementsprechend werden die Informationseinheiten eine zugehörige Metainformation aufweisen, welche die Einbindung in eine entsprechend ausgewählte Vorlage zulässt.

In einem nächsten Schritt des erfindungsgemäßen Verfahrens werden die ausgewählten Informationseinheiten in den zuvor ausgewählten vermarktungsspezifischen Vorlagen angeordnet, wobei in den Vorlagen bevorzugt eine Anordnungsart, insbesondere der spezielle Ort, einer Information innerhalb einer Vorlage, vorgegeben ist. Hierbei ist speziell an die Anordnung von Logos bzw. von interaktiven Flächen zu denken oder auch an den Preis eines Produktes, welche von einzelnen Empfängern bzw. Empfängergruppen erwartungsgemäß an gewissen Orten/Stellen innerhalb eines Computerfensters angeordnet sind. Insbesondere die Anordnung von Logos findet man häufig im oberen rechten Ausschnitt eines Fensters, wobei man üblicherweise den Preis unten rechts vermutet. Abweichungen von dieser Anordnung sind selbstredend von der Erfindung umfasst. Bei der Anordnung der Informationseinheiten ist jedoch nicht nur deren örtliche Anordnung innerhalb eines Bildschirmfensters von der Erfindung umfasst, sondern auch die zeitliche sowie akustische Anordnung. So kann beispielsweise beim Ziehen eines Mauszeigers auf eine interaktive Fläche ein klangliches Element ertönen oder auch eine visuelle Aufmerksamkeitserregung erscheinen.

Weiter ist von der Erfindung auch die inhaltliche Anordnung der ausgewählten Informationseinheiten umfasst, d.h., dass beispielsweise zusammengehörige Informationseinheiten auch zusammen in einem Ausschnitt dargestellt werden. Weiterhin umfasst das Anordnen ausgewählter Informationseinheiten auch die Vorgabe, wie die Informationseinheiten zu erscheinen haben, bzw. welchen Raum sie einnehmen dürfen oder welche Farbe bzw. Farbkombination sie aufweisen sollen. Speziell für die Anordnung von interaktiven Flächen, wie z.B. Weiterleitungslinks oder "Buttons", zum Auslösen einer Information sind oftmals zum Aufrechterhalten ihrer Interaktivitätseigenschaft an vorbestimmten Stellen des darzustellenden Ausschnitts anzuordnen. Die genaue Anordnung der einzelnen Informationseinheiten, welche, wie oben bereits ausgeführt, alle Arten visueller oder audieller Information beinhalten können, wird vom Verfahren bevorzugt automatisch ausgeführt bzw. von einem System oder einer Vorrichtung für den Verfahrensanwender erledigt. Dabei sind die notwendigen Steuerbefehle, wo, wie, wann und was angeordnet werden soll, bevorzugt bereits in der Vorlage, die im ersten Verfahrensschritt ausgewählt wurde, beinhaltet. Damit kommt der Vorlage für das erfindungsgemäße Verfahren eine wichtige Bedeutung zu, da sie nicht nur vermarktungsspezifische Vorgaben macht, sondern auch systemimmanente bzw. systemwichtige Vorgaben macht, damit das erfindungsgemäße elektronische empfängerspezifische Dokument in der Art und Weise erscheint und erklingt, wie es vom Hersteller, Händler, Agentur oder Verlag vorgesehen ist. Gleichzeitig gibt die Vorrichtung bzw. das System, auf dem das erfindungsgemäße Verfahren implementiert ist, dem Verfahrensanwender maximale Unterstützung bei der Erstellung erfindungsgemäßer empfängerspezifischer elektronischer Dokumente.

Das Anordnen der ausgewählten Informationseinheit innerhalb der ausgewählten Vorlage für das erfindungsgemäße empfängerspezifische elektronische Dokument umfasst erfindungsgemäß auch ein Ineinanderschachteln mehrerer Vorlagen und/oder mehrerer Inform ationseinheiten, die ebenfalls unter Berücksichtigung vermarktungsspezifischer Vorgaben für ein Produkt, eine Produktgruppe oder ein Informationsdokument, sowie in Abhängigkeit von einem Ausgabemedium, auf dem das elektronische Dokument angezeigt werden soll, ausgewählt werden können. Die weiteren Vorlagen, die bevorzugt hierarchisch zu den erst ausgewählten Vorlagen untergeordnet sind, können dabei aus dem gleichen Datenspeicher ausgelesen werden und in die zuerst ausgewählten Vorlagen eingebunden werden. Die Informationseinheiten, welche die Inhalte innerhalb den Vorlagen bilden, können ebenfalls aus der Datenbank ausgelesen werden, wie die zuvor ausgewählten Informationseinheiten. Denkbar ist aber auch eine hierarchische Unterteilung von Informationseinheiten, welche in erste Vorlagen oder dementsprechend hierarchisch untergeordnet in zweite oder dritte usw. Vorlagen angeordnet werden können. Hierbei bietet sich eine objektorientierte oder hierarchische Abspeicherung der Informationseinheiten in einer Datenbank an.

Einem Ineinanderanordnen von Vorlagen, Informationseinheiten und/oder Informationscontainern sind dabei nur technische Begrenzungen gesetzt, beispielsweise der vorgesehene Speicherplatz für das elektronische Dokument oder die Größe der Ausgabefläche des Ausgabemediums. Fachüblich wird man versuchen die Dateigröße für ein elektronisches Dokument in Abhängigkeit des Ausgabemediums, auf dem es angezeigt und/oder hörbar werden soll, zu beschränken, damit dieses vom Endverbraucher einfach und mühelos betrachtbar ist. Zu große Dateien können unter Umständen auf gewissen Ausgabemedien nicht richtig, lückenhaft oder gar nicht dargestellt werden.

Bevorzugt verfügt das erfindungsgemäße Verfahren weiter über einen Aktualisierungsschritt, der in einem weiteren Datenspeicher abgespeichert werden kann. Weiter bevorzugt kann die Aktualisierungsoperation alle Informationen in einer Informationseinheit automatisch aktualisieren, in dem die Aktualisierungsoperation beispielsweise beim Ersteller der Informationseinheit überprüft, ob die zum Einbinden in das elektronische Dokument vorgesehene Informationseinheit die aktuellste Version aufweist. Die Aktualisierungsfunktion kann auch derart innerhalb des elektronischen Dokuments eingebunden werden, sodass, wenn der Endverbraucher das elektronische Dokument öffnet, automatisch eine Aktualisierung der Informationen stattfindet. Dies kann beispielsweise über eine Abfrage einer über das Internet zugänglichen Datenbank erfolgen, die weiter beispielsweise vom Ersteller des elektronischen Dokuments gepflegt/aktualisiert wird.

Für die Aktualisierungsfunktion unabhängig, ob sie beim Erstellen des erfindungsgemäßen elektronischen Dokuments ausgeführt wird oder erst beim Öffnen des elektronischen Dokuments durch den Endverbraucher kann eine Rechtehierarchie vergeben werden, die bestimmten Anwendern nur bestimmte Rechte zur Aktualisierung verleiht. Normalerweise wird der Endbenutzer mit anderen Anwenderrechten bedacht werden als der Ersteller des elektronischen Dokuments. Somit können zumindest auf diesem Wege Informationen, die nicht veränderbar sein sollen, von diesem auch nicht von jedem Anwender des erfindungsgemäßen Verfahrens aktualisiert werden.

Wie bereits dargelegt, wird bei der Erstellung eines erfindungsgemäßen elektronischen empfängerspezifischen Dokuments sowohl die Auswahl einer Vorlage für das elektronische Dokument als auch die Auswahl der Informationseinheiten, welche in die Vorlage eingebunden werden sollen, nach vermarktungsspezifischen Vorgaben und in Abhängigkeit von dem Ausgabemedium und dem Empfängerprofil ausgewählt. Dabei wird immer und in jedem Schritt das Empfängerprofil, für das das elektronische Dokument vorgesehen ist, berücksichtigt. Diese Art von individualisierter Erstellung elektronischer Dokumente, welche einem bestimmten Empfänger oder einer bestimmten Empfängergruppe zur Verfügung gestellt werden sollen, folgt den vermarktungsspezifischen Vorgaben, welche von den Herstellern, Händlern oder Agenturen der Produkte oder Produktgruppen vorgegeben sind.

Das Empfängerprofil kann aus nur einer oder aus einer Vielzahl von Informationen bestehen. Die das Empfängerprofil bildenden Informationen können personenbezogen, interessenbezogen, standortbezogen, Verbrauchergruppen bezogen oder anderen Kriterien folgend aufgestellt werden. Es ist auch möglich, in dem Empfängerprofil technische Information bezüglich verwendeter Hardware abzuspeichern. Das Empfängerprofil für ein elektronisches Dokument, beispielsweise betreffend einen bestimmten Automobilhersteller, kann aus Autokaufinteressenten bestehen, die eine bestimmte Website zu diesem Zweck aufgesucht haben und dabei ihre E-Mail-Adresse zum Zwecke weiterer Informationen zur Verfügung gestellt haben. Ein Empfängerprofil kann auch aus einer Postleitzahl bestehen, welche einen geografischen oder regionalen Bereich einer Interessensgruppe darstellt. So kann eine Information über ein geplantes Bauvorhaben, welches nur von regionalem Interesse ist, in einem erfindungsgemäßen elektronischen Dokument beispielsweise nur an das betroffene geografische Empfängerprofil versendet werden.

Ein Empfängerprofil kann weitere Geoinformationen aufweisen, wie z.B. geografische Informationen oder auch konkrete Standortinformationen sowie Bewegungsinformationen, eine Adresse, ein Land oder eine Telefonvorwahl, bis hin zur genauen Adresse. Dabei werden Geoinformationen bevorzugt durch geografische Breitenangaben, geografische Längenangaben und einem Radius gemäß einer standardisierten Nomenklatur hinterlegt.

Ein Empfängerprofil kann auch aus einem Empfängerverhalten bestehen, ohne dass hierbei Geoinformationen notwendig sind. Bevorzugt wird jedoch ein Empfängerprofil aus einer Kombination aus Geodäten und Empfängerverhalten gebildet. Zum Erlangen eines Empfängerverhaltens kann man beispielsweise eine Historie über besuchte Websiten oder das Verhalten des jeweiligen Empfängerprofils heranziehen oder auch die Häufigkeit der verwandten Suchbegriffe, um spezielle Themen aufzufinden. Ein Empfängerverhalten kann weiter darüber charakterisiert werden, ob der Empfänger auf der Suche nach Informationen ist oder einen Gegenstand käuflich erwerben möchte. Ein anderes Empfängerverhalten stellt beispielsweise der Versuch einer Verbreitung von Informationen dar, mit dem der Empfänger andere Empfänger auf gewisse Thernen aufmerksam machen möchte.

Ein Empfängerprofil aufweisend Geoinformationen, Trackinginformationen und/oder ein Empfängerverhalten bildet somit eine Voraussetzung für die Erstellung eines erfindungsgemäßen empfängerspezifischen elektronischen Dokuments, da aus dem Empfängerprofil/Empfängerverhalten abgeleitet werden kann, welche Informationseinheit für den Empfänger nützlich sein könnte. Das heißt mit dem erfindungsgemäßen Verfahren kann einem Empfänger eine nützliche Information zur Verfügung gestellt werden, ohne dass dieser nach der speziellen Information gesucht hat. Geoinformationen können statisch hinterlegt sein und zum Beispiel aus Angaben zu einem Wohnort des Empfängers abgeleitet werden oder dynamisch erzeugt werden, falls der Empfänger über ein ortbares mobiles Endgerät verfügt. Auch ist es möglich aus einer IP-Adresse des Empfängers auf dessen Aufenthaltsort zu schließen und ihm in Abhängigkeit von dieser Information Informationseinheiten bereitzustellen.

Über die Reaktion des Empfängers, wann dieser welche Information wo geöffnet hat, können durch geeignete statistische Auswertungen weitere Rückschlüsse auf das Empfängerprofil getroffen werden. Hierbei sind vor Allem Angaben und Informationen wichtig, welche die Anzahl der versendeten elektronischen Dokumente beinhaltet, wie viele davon geöffnet wurden, welche Inhalte für die Empfänger interessant waren und gelesen wurden. Ferner, welche elektronischen Dokumente wo gelesen wurden, damit die Geoinformationen weiter konkretisiert oder aktualisiert werden können. Soweit es datenschutzrechtliche Bestimmungen erlauben, verfügt das erfindungsgemäße Verfahren bzw. das System, auf dem das erfindungsgemäße Verfahren ausgeführt wird, über umfangreiche statistische Funktionen, die es erlauben die Mausbewegungen, Mausklicks oder Tastatureingaben oder taktile Bildschirmeingaben auszuwerten und ein gewisses Verhalten dem Empfänger des elektronisches Dokument zuzuordnen. Wie vorher schon beschrieben können dadurch das Empfängerverhalten bzw. die Geoinformationen nicht nur konkretisiert und aktualisiert werden, sondern auch definiert werden. Für die einzelnen Empfänger kann die jeweilige Information dann konkreter zur Verfügung gestellt werden. Die Auswertung der statistischen Funktionen bzw. der statistisch erhobenen Daten kann manuell, mit Hilfe einer Datenbank oder auch durch ein selbstlernendes automatisches System erfolgen, weiches beispielsweise die Häufigkeit der gelesenen Informationseinheiten einer GeoInformation zuordnet und diese Empfänger bei Vorliegen einer neueren Information automatisch benachrichtigt. So kann beispielsweise für einen Empfänger, der sich bisher nur für eine bestimmte Automarke interessiert hat, auch Information einer anderen Automarke zugesandt werden, wenn dieser ein entsprechendes Merkmal in seinem Empfängerverhalten zeigt. Das System kann beispielsweise automatisch die Beschränkung für den Empfänger auf eine spezielle Automarke aufheben und ihm Informationen über alle Automarken zusenden oder auch nur bestimmte dem Empfängerverhalten entsprechende Informationen über eine Fahrzeugmotorisierung zukommen lassen.

Prinzipiell gibt es zwei bevorzugte Möglichkeiten, wie der Empfänger die Informationen, welche im elektronischen Dokument angeordnet sind, erlangen kann. Einerseits kann ihm das elektronische Dokument beispielsweise in Form einer Website oder in Form eines Links auf eine Website oder als E-Mail oder Kurznachricht an sein Ausgabemedium versendet werden. Andererseits kann dem Empfänger nur ein Hinweis zugesendet werden, dass für ihn nützliche Informationen auf einem bestimmten Server zur Abholung bzw. zur Einsichtnahme bereitgestellt wurden. Wie vorher bereits angedeutet, kann über die Reaktion des Benutzers Rückschluss auf das Empfängerprofil bzw. auf das Empfängerverhalten gezogen werden und dieses aktualisiert und angepasst werden. Bevorzugt wird man in das erfindungsgemäße Verfahren auch eine Möglichkeit aufnehmen, einen oder mehrere Empfänger eines gewissen Empfängerprofils zu löschen, wenn dieser die Information als nicht nützlich angesehen hat oder die Information ungelesen bleibt.

Bevorzugt wird man innerhalb des elektronischen Dokuments interaktive Flächen oder Elemente vorsehen, wie beispielsweise Buttons oder Pop-Ups, über welche das Empfängerverhalten analysiert und registriert werden kann. Weiter bevorzugt wird damit eine Kommunikation zwischen Dokumentenersteller und Dokumentempfänger hergestellt. Dies kann beispielsweise über eine so genannte Shopfunktion, d.h. eine Kaufangebotsfunktion durch Bereitsteilen eines Warenkorbs oder einer Zahlungsfunktion erfolgen. Aber auch durch eine Aktualisierungsfunktion, welche vom elektronischen Dokument ausgehend Verbindung mit dem Dokumentenersteller zum Aktualisieren der Informationseinheiten Kontakt aufnimmt, kann eine Kommunikationsfunktion mit dem Empfänger des elektronischen Dokuments hergestellt werden. Insbesondere kann dies durch eine Abfrage, ob ein Teil der Informationseinheit durch einen Teil aus dem Datenspeicher aktualisierten Teil ersetzt werden soll, erfolgen. Ist der Empfänger damit einverstanden, so kann davon ausgegangen werden, dass der Empfänger diese Information für nützlich erachtet, womit sein Empfängerverhalten erneuert bzw. bestätigt oder konkretisiert werden kann. Eine Konkretisierung eines mpfängerverhaltens wird weiter bevorzugt über interaktive Elemente, wie beispielsweise Buttons oder Hinweise, auf weitere Websites erfolgen, wenn der Empfänger des elektronischen Dokuments die interaktiven Elemente betätigt.

Für einen Hersteller oder einen Händler eines Produkts oder einer Produktgruppe sowie für Agenturen oder Verlage sind speziell die statistischen Auswertefunktionen wichtig, die es erlauben ein Empfängerprofil zu aktualisieren und zu konkretisieren. Damit ist es möglich, dem Empfänger die für ihn interessante und nützliche Information konkret zur Verfügung zu stellen. Dadurch steigt die Wahrscheinlichkeit für die Beachtung der Information im elektronischen Dokument durch den Empfänger. Je genauer und vollständiger das Empfängerprofil bzw. das Empfängerverhalten und/oder die Geoinformationen sowie das Ausgabemedium bekannt ist, desto individueller und spezifischer können die Vorlagen für das elektronische Dokument unter Berücksichtigung vermarktungsspezifischer Vorgaben für ein Produkt oder eine Produktgruppe ausgewählt werden. In der gleichen genauen, spezifischen, individualisierten und dem Empfängerprofil angepassten Art und Weise können dann die Informationseinheiten ausgewählt werden, die in Abhängigkeit vom Ausgabemedium sowie des Empfängerprofils in der von der Vorlage vorgegebenen Art innerhalb des elektronischen Dokuments angeordnet werden. Durch das erfindungsgemäße empfängerspezifische zur-Verfugung-stellen von elektronischen Dokumenten mit gegebenenfalls hierarchisch strukturierten Informationseinheiten innerhalb vermarktungsspezifischer Vorgaben wird somit ein großes Interesse beim Empfänger ausgelöst oder gar befriedigt.

Im Folgenden wird anhand der Figuren 1 bis 3 die Erfindung beispielhaft mit Ausführungsbeispielen erläutert, wobei gleiche Elemente bzw. Verfahrensschritte diesselben Bezugszeichen aufweisen. Dabei zeigt
- Figur 1: eine schematische Übersicht gemäß eines Ausführungsbeispiels des erfindungsgemäßen Verfahrens,
- Figur 2: schematisch ein erfindungsgemäßes elektronisches Dokument gemäß eines Ausführungsbeispiels, und
- Figur 3: schematisch einen Ablaufplan des erfindungsgemäßen Verfahrens gemäß eines Ausführungsbeispiels.

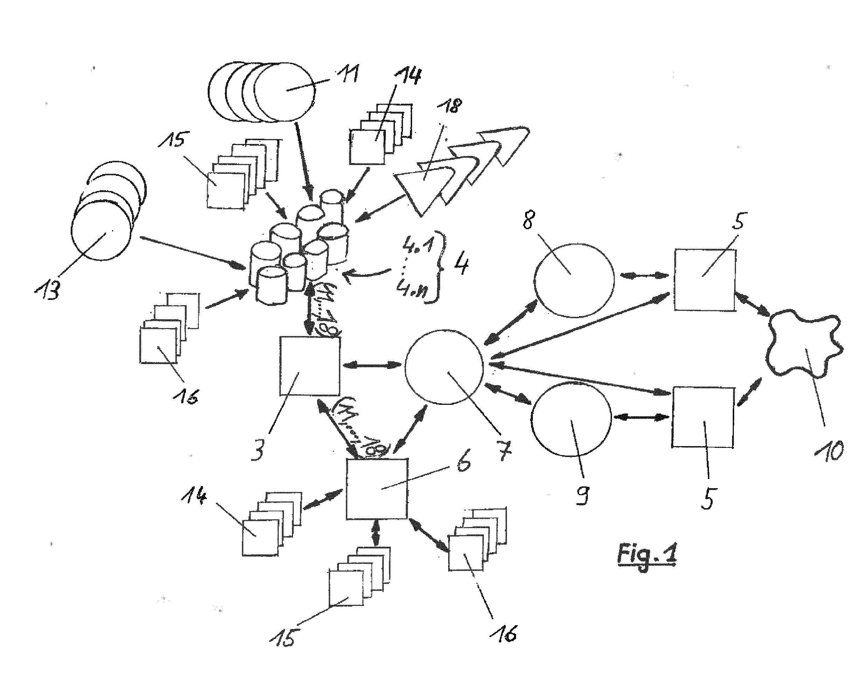

Figur 1 zeigt schematisch eine Übersicht für ein System zum Bereitstellen eines erfindungsgemäßen elektronischen empfängerspezifischen Dokuments, welches beispielsweise auf einem Computer 3 erstellbar ist. Computer 3 ist dabei mit Datenbanken 4 bidirektional verbunden, welche die für die Erstellung des erfindungsgemäßen empfängerspezifischen elektronischen Dokuments benötigten Daten abgespeichert haben. Der zum Erstellen des erfindungsgemäßen elektronischen Dokuments verwendete Computer 3 ist weiterhin über eine bidirektionale Daten-übertragungsmöglichkeit mit einer anderen Rechnereinheit 6, beispielsweise eines Herstellers oder eines Händlers oder einer Agentur bzw. eines Verlages, verbunden. Die Rechnereinheit 6 kann Informationseinheiten 16 und/oder Rechte an diesen Informationseinheiten 16 hierarchisch an die Computereinheit 3 vererben. Die übergeordnete Rechnereinheit 6 kann ihre Informationen 16, Vorlagen 14, Daten-Container 15, Metainformationen 15 bzw. Vorgaben 13 auch über das Internet für die Computereinheit 3 bzw. zum Abspeichern in der Datenbank 4 zur Verfügung stellen. Bevorzugt werden über die Rechnereinheit 6 vermarktungsspezifische Vorlagen 14 als auch herstellerspezifische oder händlerspezifische bzw. verlagsspezifische Vorgaben 13 als Grundgerüst für das erfindungsgemäße elektronische Dokument an die Computereinheit 3 übermittelt. Die Computereinheit 3 kann diese Vorgaben direkt verwenden oder in einer Datenbank 4 ablegen, wodurch sie für eine spätere Nutzung erneut zur Verfügung stehen. Die Recheneinheit 6 kann weiter Daten zu Empfängerprofilen 11 an die Einheit 3 zur Verarbeitung weitergeben.

In der Datenbank 4, welche beispielsweise in vier einzelne untergeordnete Datenbanken 4.1,..., 4.n aufgeteilt werden kann, können separat Informationen 16, Container 15, Vorlagen 14, Vorgaben 13, Metainformationen 18, und/oder Benutzerrechte separat abgespeichert werden. Eine der Datenbanken kann beispielsweise die einzelnen Empfängerprofile 11 aufweisen, an die das erfindungsgemäße elektronische Dokument versendet werden soll. Auf dem Computer 3 kann das nachfolgend genauer beschriebene Verfahren zum Erstellen eines empfängerspezifischen elektronischen Dokuments ausgeführt werden und an einen Endverbraucher 10 über das Internet 7 einem Ausgabemedium 5 gesendet werden. Das elektronische Dokument kann auch auf einem Server 8 zur Abholung durch das Ausgabemedium 5 bereitgestellt werden. Analog kann das mit dem erfindungsgemäßen Verfahren erstellte empfängerspezifisch elektronische Dokument über das Internet 7 auch einem Mobilfunknetz 9 zur Verfügung gestellt werden, welches dem Endverbraucher 10 über sein Ausgabemedium 5, z.B. ein Smartphone, auf das Vorhandensein eines neuen elektronischen Dokuments hinweist. Das elektronische Dokument kann dann vom Endverbraucher von einem Server 9 des Mobilfunknetzbetreibers abgeholt werden. Sämtliche Verbindungen zwischen den einzelnen Rechnereinheiten zu den Servern bzw. zu den Ausgabemedien sind dabei bidirektional, da mit dem Bereitstellen bzw. Versenden eines erfindungsgemäßen elektronischen Dokuments statistische Auswertefunktionen mit ausgeliefert bzw. bereitgestellt werden, die an die versendende bzw. bereitstellende Einheit eine Rückantwort (Feedback) zurückgeben. Aus dieser zurückerlangten Information kann vom Betreiber des erfindungsgemäßen Verfahrens Rückschluss auf das Empfängerprofil 11 bzw. auf das Empfängerverhalten gezogen werden und die entsprechenden Datenbanken 4.1,..., 4.n aktualisiert bzw. angepasst werden.

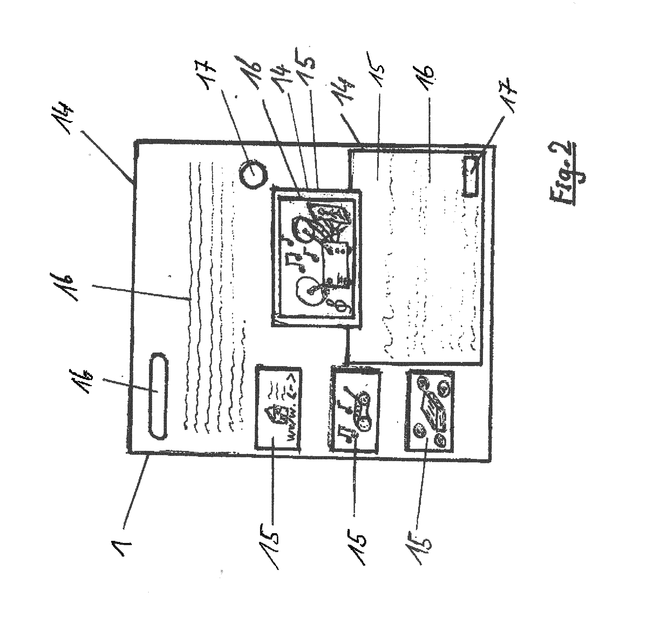

In Figur 2 ist beispielhaft ein empfängerspezifisches elektronisches Dokument 1 dargestellt, welches eine erste Vorlage 14 aufweist, in der mehrere Informationseinheiten 16 und Informations-Container 15 eingebunden sind. Dabei können die Informationseinheiten 16 beispielsweise ein Firmenlogo des Produktherstellers bzw. des Herstellers einer Produktgruppe oder einer Warenkette bzw. das einer Agentur oder eines Verlages darstellen. Daten-Container 15 und Informationseinheiten 16 können auch als herkömmlicher Text oder als Videoclip oder als Musiksequenz in dem elektronischen Dokument 1 eingebunden sein. Selbstredend können auch Kombinationen von Videoclips, Text und Musik in einer Informationseinheit 16, welche auch als Container 15 bezeichnet werden kann, dargestellt werden. Die einzelnen Informationseinheiten 16 bzw. Container 15 werden meist von den Herstellern selbst oder von Agenturen, die beispielsweise von den Herstellern beauftragt sind, als auch von Verlagen dem Ersteller des elektronischen Dokuments 1 zur Verfügung gestellt. Das in Figur 2 dargestellte elektronische Dokument weist ferner interaktive Elemente 17, auf die es einem Nutzer des elektronischen Elements beispielsweise erlauben, weitere Informationen zu einem Container 15 oder zu einer Informationseinheit 16 zu bekommen. Über die interaktiven Elemente 17 kann auch eine Shopfunktion 180 oder eine Registrierungsfunktion 190 aktiviert werden. Mit diesen Shop- oder Registrierungsfunktionen kann der Ersteller des elektronischen Dokuments 1 oder auch das ihn beauftragende Unternehmen Kontakt mit dem Endverbraucher mit dem Nutzer des elektronischen Dokuments 1 aufnehmen.

Das in Figur 2 dargestellte elektronische Dokument 1 beinhaltet innerhalb der ersten Vorlage 14 weitere Vorlagen 14, die beispielsweise als Untervorlagen in die erste Vorlage 14 eingebunden sind und gegebenenfalls eine Untergruppe zu einer übergeordneten Produktgruppe darstellen kann. So kann beispielsweise bei einem elektronischen Dokument 1 eines Verlages, der sowohl Musik als auch Textform publiziert, eine Vorlage 14 für die Textform und eine Vorlage 14 für die Musikform innerhalb des elektronischen Dokuments 1 eingebunden werden.

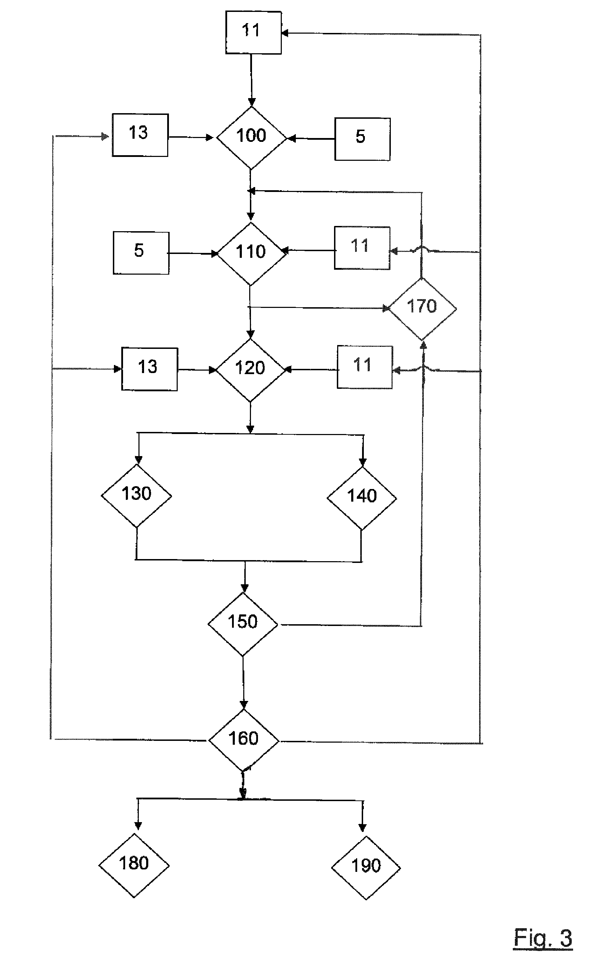

Figur 3 zeigt schematisch ein Ablaufdiagramm des erfindungsgemäßen Verfahrens zum Erstellen eines empfängerspezifischen elektronischen Dokuments 1. Dabei wird in einem ersten Verfahrensschritt 100 die zu verwendende Vorlage 14 für das elektronische Dokument 1 ausgewählt, wobei vermarktungsspezifische Vorgaben 13 berücksichtigt werden und gleichzeitig die Vorlage 14 die Anforderungen an ein vorbestimmtes Ausgabemedium 5 erfüllen muss. Selbstredend ist Voraussetzung für die richtige Auswahl einer Vorlage 14 die Kenntnis des Empfängerprofils 11, speziell an welches Ausgabemedium 5 das elektronische Dokument 1 versendet werden soll. Bevorzugt wird das erfindungsgemäße Verfahren auf einem Computer 3 ausgeführt, welcher durch seine Verbindung zu mindestens einem Datenspeicher 4.1,..., 4.n und/oder zu einer (übergeordneten) Rechnereinheit 6 eines Herstellers, Händlers, Agentur oder Verlages unter Kenntnis des Empfängerprofils 11, zusammen mit den erhaltenen Vorgaben 13 für die Vermarktung, die entsprechende Vorlage 14 auswählt. Nach Auswahl der Vorlage 14 wird die Vorlage in Auswahlschritt 110 mit Inhalten gefüllt, die bevorzugt in den Datenbanken 4.1, ..., 4.n als Container 15 oder Informationseinheiten 16 vorliegen. Dabei kann ein Container 15 aus Informationseinheiten 16 bestehen und weitere Vorlagen 14 enthalten. Interaktive Elemente 17 können des Weiteren sowohl in die Vorlagen 14 als auch in die Informationseinheiten 16 sowie in den Containern 15 eingebunden sein und entsprechend mit weiteren Verfahrensanweisungen hinterlegt sein. So kann beispielsweise über ein interaktives Element 17 eine Aktualisierungsfunktion 170 ausgelöst werden, damit die verwendete Informationseinheit aktualisiert wird. Bei der Einbindung der Informationseinheiten 16 bzw. der Container 15 werden dabei Informationen über das Empfängerprofil 11, die den Informationseinheiten 16 bzw. dem Container 15 zugeordnet sind, berücksichtigt. Ferner wird bei der Zuordnung bzw. Einbindung im Verfahrensschritt 120 der Informationen 15, ..., 18 in die Vorlagen 14 die Ausgabeeinheit 5, auf der das elektronische Dokument angezeigt werden soll, berücksichtigt. Entspricht das Format einer Informationseinheit 16 oder eines Containers 15 nicht den Formatvorgaben der Ausgabeeinheit 5, so kann dieses unter Umständen auf der Ausgabeeinheit 5 nicht ausgegeben werden. Nach Einbindung der Informationsinhalte 15,16 in die Vorlagen 14 kann gegebenenfalls über eine Aktualisierungsfunktion 170 geprüft werden, ob die eingebundenen Informationen auf dem neuesten Stand sind. Die Überprüfung auf den aktuellen Stand kann dabei manuell über interaktive Elemente 17 oder auch automatisch erfolgen.

Nach Überprüfung der Aktualität der eingebundenen Informationen 15, 16 im Verfahrensschritt 120 können die in Abhängigkeit vom Empfängerprofil 11 und/oder dem Empfängerverhalten oder auch in Abhängigkeit des Ausgabemediums 5 erzeugten elektronischen Dokumente 1 entweder in einem nächsten Verfahrensschritt 130 zur Abholung durch den Empfänger 10 bereitgestellt werden oder direkt mit Verfahrensschritt 140 an dem Empfänger 10 versendet werden. Nach dem Bereitstellen 130 bzw. Versenden 140 des elektronischen Dokuments 1 kann mit einer ersten Auswertung 160 begonnen werden, in der z.B. geprüft wird, wie lange das versendete Dokument ungeöffnet bleibt oder wie lange das bereitgestellte Element im Postfach verbleibt, bis es vom Empfänger 10 abgeholt bzw. ausgelesen wird. Aus diesen Angaben können wiederum Rückschlüsse für das Empfängerprofil 11 bzw. das Empfängerverhalten 12 geschlossen werden. Nach dem Öffnen des elektronischen Dokuments 1 im Verfahrensschritt 150 können weitere statistische Auswertungen 160 bezüglich des Empfängerverhaltens 12 und des Empfängerprofils 11 getroffen werden. Hat der Empfänger das Dokument 1 geöffnet und gleich wieder geschlossen, so kann dies ein Indiz dafür sein, dass er die ihm zur Verfügung gestellte Information für nicht relevant hält. Andererseits kann es bei öfterem Öffnen und Schließen eines elektronischen Dokuments 1 ein Indiz dafür sein, dass die Information bei einem Empfänger angelangt ist, der hierfür großes Interesse zeigt. Speziell beim Öffnen 150 des elektronischen Dokuments 1 mittels eines stationären internetfähigen Computers kann beispielsweise die Geoinformation des Endverbrauchers 10 ermittelt werden, sofern es die datenrechtlichen Bestimmungen zulassen.

Ist das elektronische Dokument 1 mit interaktiven Elementen versehen, so kann eine weitergehende Kommunikation zwischen dem Endverbraucher 10 und dem das Dokument 1 erstellenden Unternehmen, d.h. mit seinem Computer 3, aufgebaut werden. Über die interaktiven Elemente können dann beispielsweise vermarktungsspezifische Angaben, wie z.B. Preise, Liefertermin, Ausstattung, Qualitätsangaben, Stückzahl etc. leicht und empfängerindividuell ausgetauscht bzw. aktualisiert werden. Über die so mit dem Rückfluss gewonnenen statistischen Informationen können beim Ersteller des elektronischen Dokuments 1 in dessen Datenbanken 4 die Empfängerprofile 11, Vorlagen 14, Metainformationen 18, Daten über Empfängerverhalten 12 bis einschließlich den Vorgaben 13 für die Vorlagen 14 aktualisiert und angepasst werden. Mit dem beschriebenen erfindungsgemäßen Verfahren zum empfängerspezifischen Erstellen elektronischer Dokumente 1 kann also speziell bei wiederholtem Ausführen des Verfahrens eine Lernfunktion eintreten, dahingehend dass für die einzelnen Empfänger bzw. Empfängergruppen nur relevante und die die Empfängergruppe interessierenden Informationen zugeleitet werden, wodurch eine höhere Akzeptanz beim Empfänger erreicht werden kann. Über die Auswertung 160 des Empfängerverhaltens 12 bzw. der Empfängerdaten 11 können weitere Informationen für andere Produkte oder Produktgruppen, die dem Empfänger 10 interessant erscheinen, in weiteren elektronischen Dokumenten 1 zur Verfügung gestellt werden.

In dem in Figur 3 dargestellten Ausführungsbeispiel erkennt der Fachmann, dass einzelne Verfahrensschritte iterativ und/oder in anderer Reihenfolge ausgeführt werden können.

Das elektronische Dokument 1 ist somit flexibel und einfach in seinem Aufbau, wobei das Erscheinungsbild einfach und benutzerfreundlich aufgebaut ist, womit der Empfänger 10 leicht geführt werden kann. Durch den strukturierten Aufbau des elektronischen Elements mittels Vorlagen 14 und darin einzubindenden Containern 15 und Informationseinheiten 16, welche mit Metainformationen 18 versehen sind, ist es für Nichtfachleute der elektronischen Datenverarbeitung möglich, schnell und einfach ein erfindungsgemäßes empfängerspezifisches elektronisches Dokument 1 aufzubauen und der beabsichtigten Zielgruppe zur Verfügung zu stellen. Durch den einfachen Aufbau des erfindungsgemäßen elektronischen Dokuments 1 ist das Verfahren zum Erstellen, Bereitstellen und/oder Versenden und vor allem das elektronische Dokument 1 selbst, einfach und zuverlässig in der Handhabung, wodurch unnützer technischer Aufwand bei der Erstellung und Handhabung des elektronischen Dokuments 1 vermieden werden.

### BEZUGSZEICHENLISTE

- 1: elektronisches Dokument
- 3: Computer
- 4: Datenspeicher 4.1, ..., 4.n
- 5: Ausgabemedium
- 7: Internet
- 8: Server
- 9: Mobilfunknetz
- 10: Empfänger / Endverbraucher
- 11: mpfängerprofil
- 12: Empfängerverhalten
- 13: vermarktungsspezifische Vorgaben
- 14: Vorlage
- 15: Container
- 16: Informationseinheit
- 17: interaktives Element
- 18: Metainformation 100 Auswahl-Vorlage
- 110: Auswahl Informationseinheit
- 120: Anordnen Informationseinheit+Container
- 130: Bereitstellen
- 140: Versenden
- 150: Öffnen des elektronischen Dokuments
- 160: statistische Auswertung des Empfängerverhaltens
- 170: Aktualisieren der Informationseinheiten
- 180: Shopfunktion
- 190: Registrierungsfunktion

## Patentansprüche

1. Computerimplementiertes Verfahren zum Erstellen und/oder Aktualisieren mit anschließendem Bereitstellen (130) oder Versenden (140) von empfängerspezifischen elektronischen Dokumenten (1) mit ausgewählten Informationseinheiten (16) in Abhängigkeit der technischen Eigenschaften eines Ausgabemediums (5) zum Ausgeben des elektronischen Dokuments (1) beim Empfänger (10) und unter Berücksichtigung vermarktungsspezifischer Vorgaben (13) für ein Empfängerprofil (11) mit den folgenden Schritten:
a) Bereitstellen einer Vielzahl von Vorlagen (14) mit vermarktungsspezifischen und Ausgabemedium-angepassten Vorgaben (5,13) in einem ersten Datenspeicher (4.1 ) ;
b) Bereitstellen in einem zweiten Datenspeicher (4.2) von mit Metainformationen (18) versehenen Informationseinheiten (16), wobei die Metainformationen (18) Informationen der vermarktungsspezifischen und Ausgabemedium-angepassten Vorgaben (5,13) darstellen, die einem Empfängerprofil (11) zuordbar sind;
c) Auslesen eines bereitgestellten Empfängerprofils (11) aus einem dritten Datenspeicher (4.3), wobei das Empfängerprofil (11) eine Hardwareinformation des Ausgabemediums (5), die aus Konfigurationsdateien oder Hardwaretreibern ausgelesen wird, sowie empfängerspezifische Informationen enthält, die aus einem Empfängerverhalten und Geo-informationen bestimmbar sind;
d) Auswählen zumindest einer zum ausgelesenen Empfängerprofil (11) und zu den vermarktungsspezifischen Vorgaben (13) passenden Vorlage (14) in Abhängigkeit der ausgelesenen Hardwareinformation;
e) Auswählen zumindest einer zu den Informationen des ausgelesenen Empfängerprofils (11) und zu der ausgewählten Vorlage (14) passenden Informationseinheit (16);
f) Erstellen eines elektronischen Dokuments mittels automatischem Anordnen (120) der zumindest einen zum Empfängerprofil (11) passenden Informationseinheit (16) in der ausgewählten Vorlage (14) anhand von Anordnungsinformationen, die in der Vorlage (14) hinterlegt sind;
g) Bereitstellen (130) oder Versenden (140) des empfängerspezifischen elektronischen Dokuments (1);
h) Auswerten (160) des Empfängerverhaltens nach Bereitstellen (130) oder Versenden (140) des elektronischen Dokuments (1) und, sofern eine aus dem ausgewerteten Empfängerverhalten abgeleitete Information vom ausgelesenen Empfängerprofil (11) abweicht, Aktualisieren und Anpassen des Empfängerprofils (11) und Wiederholen der Schritte c) bis h) mit dem aktualisierten und angepassten Empfängerprofil.

2. Verfahren nach Anspruch 1, bei dem die Schritte b) bis h) wiederholt werden, wenn im zweiten Datenspeicher (4.2) eine neue oder aktualisierte Informationseinheit (16) vorliegt.

3. Verfahren nach einem der vorgenannten Ansprüche, wobei das Auswerten (160) des Empfängerverhaltens über eine bereitgestellte bzw. versandte Informationseinheit (16) erfolgt, die ein interaktives Element (17) aufweist, das bei einem Betätigen eine Aktualisierungsfunktion (170) auslöst, die die Informationseinheit (16) aktualisiert.

4. Verfahren nach einem der vorgenannten Ansprüche, wobei das Ausgabemedium (5) ein Bildschirm, eine Druckervorrichtung, ein Lautsprecher, ein computerlesbares Speichermedium und/oder eine Übertragungseinrichtung ist.

5. Verfahren nach einem der vorgenannten Ansprüche, bei dem die Informationseinheiten (16) in dem zweiten Datenspeicher (4.2) hierarchisch und/oder objektorientiert abgespeichert sind und einen visuellen und/oder audiellen Inhalt aufweisen.

6. Verfahren nach einem der vorgenannten Ansprüche, bei dem mindestens eine der Informationseinheiten (16) eine weitere Vorlage (14) und/oder eine weitere Informationseinheit (16) aufweist, die in Abhängigkeit von dem Ausgabemedium (5) und von mindestens einer aus dem dritten Datenspeicher (4.3) ausgelesenen Information eines Empfängerprofils (11) sowie dem Empfängerprofil (11) zuordbaren Metainformationen (18) auswählbar ist.

7. Verfahren nach einem der vorgenannten Ansprüche, wobei das Empfängerprofil (11) aus mindestens einer Information aus einer Vielzahl von Geo-Informationen und/oder eines Empfängerverhaltens (12) erstellt wird, wobei die Vielzahl von Geo-Informationen folgende Angaben aufweist: geographische Informationen, Trackinginformationen, Bewegungsinformationen, Standortinformationen, geographische Breitenangaben, geographische Längenangaben, einen Radius, eine Postleitzahl, eine Adresse, ein Land, eine Lokalisierungsinformation, eine Koordinate und/oder eine Positionsinformation.

8. Verfahren nach einem der vorgenannten Ansprüche, bei dem die im Empfängerprofil (11) enthaltene Hardwareinformation aus einer Vielzahl von Hardwareinformationen auswählbar ist, wobei die Vielzahl von Hardwareinformationen folgende Angaben aufweisen kann: Bildschirmauflösung, Frequenz, Bildschirrnabmessung, Bildschirmformat, Farbtiefe, Druckerauflösung, Programminformation, Browserinformation, Treiberinformation und/oder Hardwareprofil.

9. Verfahren nach einem der vorgenannten Ansprüche, wobei mittels einer Rechtehierarchie Informationseinheiten (16) mitsamt Zugriffsrechten derart hierarchisch abspeichert werden, dass in einer ersten Hierarchiestufe Informationseinheiten (16) nicht geändert, in einer zweiten Hierarchiestufe Informationseinheiten (16) in bestimmtem Umfang geändert, in einer dritten Hierarchiestufe Informationseinheiten (16) vollumfänglich geändert und in einer vierten Hierarchiestufe Informationseinheiten (16) gelöscht werden können.

10. Verfahren nach einem der vorgenannten Ansprüche, wobei das elektronische empfängerspezifische Dokument (1) in Abhängigkeit von dem Ausgabemedium (5) mit dem es ausgeben werden soll, auf einem Server (8, 9) für das Empfängerprofil (11) bereitgestellt oder direkt an den Empfänger versendet wird, wobei das elektronische Dokument (1) an alle die Empfänger (11) versendet bzw. für alle die Empfänger (5) bereitgestellt wird, die mindestens eine Gemeinsamkeit im Empfängerprofil (11) oder in den Metainformationen (18) aufweisen.

11. Verfahren nach einem der vorgenannten Ansprüche, wobei eine Aktualisierungsfunktion (170) mindestens einen Teil einer Informationseinheit (16) durch einen aus einem weiteren Datenspeicher ausgelesenen Teil ersetzt.

12. Vorrichtung zum Erstellen eines empfängerspezifischen elektronischen Dokuments (1), aufweisend:
- eine erste Auswahleinheit zum Auswählen (100) zumindest einer zu einem aus einem Datenspeicher (4.2) auslesbaren Empfängerprofil (11) passenden Vorlage (14) für das elektronische Dokument (1) unter Berücksichtigung vermarktungsspezifischer Vorgaben (13) für das Produkt sowie in Abhängigkeit von einem Ausgabe- oder Speichermedium (5), auf dem das elektronische Dokument (1) ausgebbar ist;
- eine zweite Auswahleinheit zum Auswählen (110) von produktbezogenen Informationseinheiten (16) aus einer Vielzahl von in einem Datenspeicher (4.1) abgespeicherten Infarmationseinheiten (16) in Abhängigkeit vom Ausgabe- oder Speichermedium (5) und von mindestens einer Information aus dem ausgelesenen Empfängerprofil (11) sowie dem ausgelesenen Empfängerprofil (11) entsprechenden Metainformationen (18), die den Informationseinheiten (16) zugeordnet sind.
- einer Anordnungseinheit zum Anordnen (120) der ausgewählten Informationseinheiten (16) in der ausgewählten Vorlage gemäß einer Anordnungsinformation, die in der Vorlage (14) für das elektronische Dokument (10) hinterlegt ist.

13. Vorrichtung nach Anspruch 12, bei der eine Versendeeinheit zum Bereitstellen (130) oder Versenden (140) des elektronischen empfängerspezifischen Dokuments (1) an ein Empfängerprofil (11) in einer Formatierung in Abhängigkeit vom Ausgabemedium (5), mit dem es ausgegeben werden soll, vorgesehen ist.

14. Vorrichtung nach Anspruch 12 oder 13, bei der eine Aktualisierungseinheit zum automatischen Ausführen einer in einem Datenspeicher (4.3) abgespeicherten Aktualisierungsoperation (170) auf mindestens einer Auswahl der Informationseinheiten (16) vorgesehen ist, falls in einer in einem Datenspeicher (4.5) abgespeicherten Rechtehierarchie hierzu eine Berechtigung vorliegt.

15. Computerlesbares Medium mit Steuerbefehlen zum Ausführen des Verfahrens nach einem der Ansprüche 1 bis 11.
